# EUROPEAN PATENT APPLICATION

(11) **EP 1 136 453 A1**
(43) Date of publication of application: **26.09.2001**
(21) Application number: 99973008.8
(22) Date of filing: 01.03.1999
(51) Int. Cl.: C03B 9/38

(54) **SYSTEM FOR COOLING MOULDINGS FOR GLASS ARTICLE FABRICATION MACHINES**

(30) Priority: 02.12.1998 MX 9810126
(71) Applicant: Vidriera Monterrey, S.A. DE C.V., Monterrey, Nuevo Leon 64570 (MX)
(72) Inventor: SILLER RODRIGUEZ, Rodolfo Octavio, Monterrey, Nuevo Leon 64630 (MX)
(74) Representative: Altenburg, Udo, Dipl.-Phys.
(86) International application number: MX9900007
(87) International publication number: WO0032526

(57) **Abstract**

A mold cooling system for glassware forming machines of multiple sections, comprising: a cooling apparatus per each section, driven by a motor controlled by a control system, to regulate the speed of the motor and, consequently, the flow and pressure of the cooling air that will control the temperature of the mold which is the variable of the process.

## Description

### BACKGROUND OF THE INVENTION.

### A. FIELD OF THE INVENTION.

This invention refers to a mold cooling system for I.S. glassware forming machines and, more specifically, to a mold cooling system by independent fans directly coupled to the frame of each section of the machine.

### B. DESCRIPTION OF THE RELATED ART.

In the process for the formation of glass containers in I.S. machines, a continuous cooling of the molds is required in order to maintain a constant temperature of the mold within a prestablished operation range for the container formation. When said temperature varies, this variation cause defects in the manufacturing of the containers.

The traditional way to obtain the mold cooling is by means of a highly powered fan arrangement (250 Hp to 600 Hp.), which provides the necessary flow of cooling air, normally placed in special rooms located in the plant cellar. Typically, diverse fan arrangements with the less possible number of fans that could provide the cooling air to a greatest number of machines, are provided, each machine normally including from six to eight forming sections.

Considering a furnace which provides glass to four I.S. machines, the ideal is to have a fan per machine, plus one fan as a backup in case of failure of any of the fans which are operating. In order to save electrical energy and equipment, an arrangement of four fans having four discharges, connected to a plenum chamber placed outside the fan room is commonly provided. In this arrangement work only three fans, remaining one fan as a back up.

A duct, known as a "shoe", is coupled to each discharge of the plenum, directed to each corresponding machine; From each "shoe", a duct providing cooling air to the mold of each section of the machine, is derived. The diameter of said "shoe" is gradually diminishing to form a cone to the last section of the machine. The conical shape of the "shoe" is for the purpose of distributing the same volume of air in all the sections of the machine. At the output of the plenum and before each "shoe", a blind gate operated by an electric actuator connected to a controller to regulate the cooling air flow to the machines is included. This controller has two transmitters as inputs; one for the static pressure and the other for the temperature of the air within the "shoe". The purpose of this controller is to secure a constant pressure in the system, so as to indirectly maintain a constant temperature in the mold. The temperature transmitter is used to compensate said pressure because, at night, when more cooled air is available, a more efficient cooling is obtained and consequently requires less air volume.

In order to exemplify a daily operation, the operator disables a section of any of the machines for purposes of changing molds, crowns, etc. or for mechanical or electronic maintenance, upon disabling said section, the operator closes a butterfly type gate in the base of the frame to impede that the air excessively cools the molds. Upon closing this gate, an immediate increasing of pressure is caused in the rest of the sections of the machine, causing disturbance because of variations of the temperature in the mold. The controller compensates this excess of pressure closing the blind gate in the "shoe" but this action is slow. At the moment in which the operator turns to open the gate again the opposite occurs, the pressure of the system is reduced providing less air to cool the molds causing temperature variations.

Another problem arising from this system is that upon failing of a fan, all the machines are turn down because of deficiency of cooling. Even though they are connected in plenum, upon stopping a fan there is a risk for all the machines since with only two fans it is not possible to maintain the necessary flow for the cooling. This stopping of machines Is until the backup fan Is turn on to work.

In the current cooling system there is also a low cooling efficiency since there are cooling losses in the trajectory of the air upon transporting the air from the fan to the machine. As an example, a "F" type machine having 8 sections requires a flow of 3500 ft³/min. at a pressure of 32" of water column. The dimensions of a fan for this machine, in theory, would be of 28000 ft³/min. (3500 x 8 = 28000 ft³/min.) to the same pressure of 32" of water column. Really, for this machine, a fan of 32000 ft³/min. with 34" of water column is selected. This is done in order to compensate for losses. These losses become significant heavy duties. Another very important point is the cost of a backup fan. These fans have a high cost. For example, a fan and motor assembly of 32000 ft³/min. at 34" water column has a cost of about $30,000.00 USD. The cost of its starting device is of about $7,500.00 USD. It could be seen that in order to backup the cooling process, one have $37,500 USD stopped making nothing.

In summary, among the disadvantages of the conventional mold cooling systems using a bank of fans and a manifold to distribute the cooling air to the sections of the forming machine, it could be mentioned:
1. Great consumption of electric energy;
2. Upon failing a fan, the whole machine or several machines are affected when having a plenum;
3. Great looses and pressure fallings because of the path through the air ducts.
4. Necessity of having big special rooms for the fans;
5. A backup which results very expensive;
6. Upon stopping a section, the pressure of the "shoe" is increased and the surplus air goes to the other sections causing disturbances in the process;
7. Each starting of these fans causes great picks of electric current (which in the case of Mexico, the Federal Commission of Electricity could charge because of surpassing the maximum demand) as well as mechanical strengths in the rotor and bearings.

It is, therefore, highly desirable to have an arrangement in order to make the cooling system more efficient so that it has minimum losses. Also, it is required to have an arrangement in order to avoid a negative impact in the production when sections of an I.S machine be turns off. Furthermore it is sought to save electric energy since after the compressors, the cooling of the molds is the second concept of greatest consumption of electric energy in the plants. So that if an arrangement having all the above-mentioned advantages is provided, the production costs will go down because of a less consumption of energy and the productivity is increased because of the less defects in the products caused by the deficient cooling of the molds.

Contrarily to that which could be thought and proposed, the mold cooling system of this invention, which incorporates and operates a single fan per each section of each machine, surprisingly results much more efficient, effective and economic than the conventional cooling systems due, among other reasons, to the advantages that are discussed in the following.

All of the disadvantages of the conventional systems are overcome by means of the mold cooling system of this invention, because of the elimination of the big fans, of the room of fans, of the plenum and of the "shoe" and by replacing all of said equipment, for an individual fan per section. This fan is dimensioned in accordance with all of the specifically required for the section, i.e., without over-dimensioning for reasons of losses.

By having a fan per section, it is allowed to have the flow required by the mold and so maintain its temperature stable. When the operator shut down any section, there will be no pressurizing and therefore the remaining sections will not be harmed. Upon absence of the pressurizing or depressurizing which have already been previously mentioned, there will be no variation of the temperature in the mold and consequently the process will not be affected. Furthermore, the operator could stop the fan and automatically save electric energy and all of this without affecting to the process.

In case of failure of any fan, only one section is affected without harming the other sections. By being modular (a fan per section) facilities for quick changes will be obtained, in order to avoid impact on the productivity. A high efficiency is obtained since by having the fan directly coupled at the frame of the I.S. machine, worthless pressure losses will be obtained. The operator will be able to vary the amount of air, not by means of closing of the current gate in the frame, but by varying the speed of the motor of the fan. In this way energy is saved since the fan moves less load. In the traditional system the air is closed at the discharge and the reduction of air is obtained but with a minimum of saving of energy.

A very important advantage of the mold cooling system of the present invention, is the fact that in order to backup this process, it is enough to have a replacement unit. Said small unit is much more economic than the big unit that was already mentioned, i.e. a less investment without producing Is obtained.

In this invention, one could incorporate an inverter (control of the speed of the alternating current motor) per each fan, with which the air flow could be varied in a more efficient way since upon varying the speed of the motor the flow will be varied and besides electric current is saved. As the feeding energy varies to the cube of the speed of the fan, the consumption is considerably decreased. At a 60% of the volume of the fan, the consumption of energy is only 22% which is obtained from (0.60)³. The control by inverter uses 40% less energy than when the control at the suction is used, and uses 66% less energy than the control of flow at the discharge.

In other words, at a 60% of volume of the fan the consumption of energy are the following according to the used control method:

| METHOD | CONSUMPTION |
|---|---|
| • Control in Discharge | 88% |
| • Control in Suction | 62 % |
| • Control by Inverter | 22 % |

This demonstrates that there is a considerable saving of energy since by statistics, most of the time the fans are working in a range of 40% to 70% of their volume capacity.

Additionally, a control of the mold temperature can be included. In the current way of operation the operation temperature is inferred according to the flow and the pressure of the air. Unlikely of the above, optical or infrared sensors or thermocouples can be included for the measuring of the mold temperature, so that by using a controller, a closed loop using the inverter is carried out in order to vary the speed of the motor and consequently the flow and pressure of the air and finally the temperature which actually is the variable of the process.

Last but not least, in the production of glass containers a limitation for increasing the velocity of production is the mold temperature. Therefore, in accordance with the present invention, an air pre-cooling system can be included so that, consequently, the velocity of production can be increased. This is achieved because a cooled air has a greater extracting capacity of heat extraction than an environmental air. Upon pre-cooling the air, a less amount of air will be required for cooling, therefore the speed of the inverter is lowered and consequently a greater saving of energy is obtained. The pre-cooling system can be considered as a water cooler or a sort of honeycomb with cold water at the suction or at the discharge. With this pre-cooling system careful has to be taken that the cooling air does not contain water because the presence of the water could cause a number of defects in the product.

Among other advantages of the mold cooling system, of the present invention, one could mention: zero impact in process due to variations of temperature in the mold upon stopping sections, which do not affect the other sections in the machine; energy saving; reduction in the cost of equipment because there is no an expensive backup; lower risk upon failure of a fan since only a single section would be impacted.

In summary, among the advantages obtained by the mold cooling system of the present invention, regarding the above mentioned conventional systems, the following could be mentioned:
1. Saving of energy by using inverters;
2. Reduction in defective by the variation of temperature in the mold upon having a better controlled air;
3. Reduction in the mold preheating time, because the fan is maintained turn off at the desired time;
4. Worthless losses of pressure and flow due to short paths;
5. Upon failing of a fan, this affect only a single section;
6. Upon stopping and starting sections, the others are nor affected, i.e. there is no interference at the process because the "shoe" is not pressurized and depressurized because this do no longer exists;
7. Upon stopping sections (dead times) the fans automatically can be stopped with great savings as for electric energy;
8. Special rooms are not required;
9. By being a modular system, any change results very easy and quickly;
10. Uses replacements of less cost, with an inverter and a fan;
11. A same replacement may be used for several machines.
12. Upon working with less number of sections, the fans of said sections are stopped (in machines of eight sections, working with six sections) and there is an important saving as for the required electric energy.
13. There are no picks of current upon starting fans since the acceleration ramp of the inverter is used;
14. Upon starting with soft ramp there is no strengths in the bearings (premature wear out in the equipment);
15. Prepared for closing the temperature control loop of the mold (the inverter includes the PID controller integrated).

### SUMMARY DE THE INVENCION.

It is therefore a main object of the present invention, to provide a mold cooling system for glassware forming machines, by means of independent fans directly coupled to the frame of each section of the machine.

It is also a main object of the present invention, to provide a mold cooling system for glassware forming machines, of the above disclosed nature, which reduce the defects of the produced articles by the variation of temperature in the mold, upon providing an air flow better controlled by this system.

It is still a main object of the present invention, to provide a mold cooling system for glassware forming machines, of the above disclosed nature, which allows to include inverters in the motors, so that is possible maintain any of the fans turned off for maintenance or fittings in a section, during a desired time, saving energy.

It is additionally a main object of the present invention, to provide a mold cooling system for glassware forming machines, of the above disclosed nature, by which, upon disabling any section of the machine, the others are not affected, i.e. there are no disturbances in the process, because the "shoe" is not pressurized and depressurized because it does no longer exist.

These and other objects and advantages of the present invention, will be evident to the persons having ordinary skill the field, from the following detailed description of the invention, which is provided in connection with a specific embodiment of the invention, illustrated in the accompanying drawings.

### BRIEF DESCRIPCION DE THE DRAWINGS.

Figure 1, it is a schematic diagram of the conventional mold cooling system for I.S glass container forming machines; and
Figure 2, it is a schematic diagram of the mold cooling system for glassware forming machines, in accordance with the present invention.

### DETAILED DESCRIPTION OF THE INVENTION.

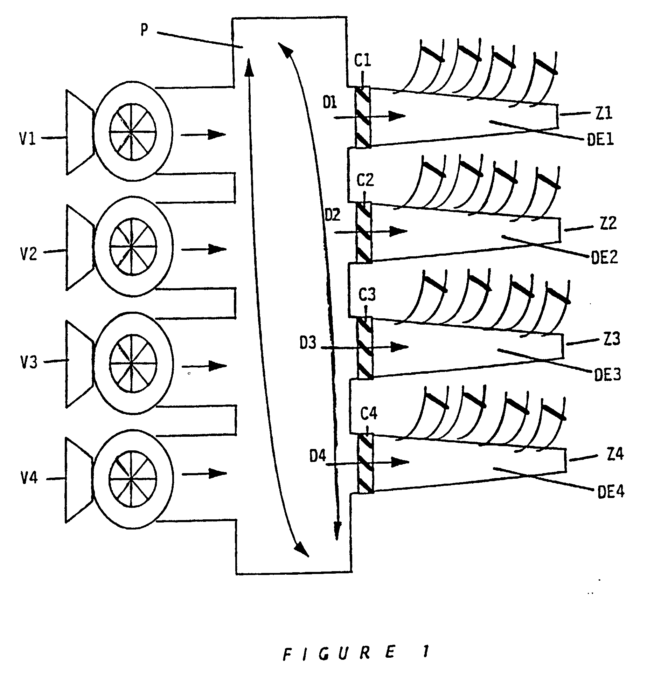

As a matter of comparative reference, referring to the Figure 1, and for a furnace that provides the glass to four I.S machines., the conventional mold cooling system ideally comprises four fans V1, V2, V3 V4, three of which operate to provide cooling air to the four machines, remaining one as a backup in the case of failure of any of the fans which were operating. These fans V1 to V4 are placed in special rooms located in the cellar of the plant (not illustrated), each fan generally has a power between 250 Hp to 600 Hp., each of which, for a typical "F" type machine having 8 sections, providing a flow of 3500 ft³/min. to 32" column of water, per section; a "plenum" chamber P consisting of a manifold of 46" of diameter, outside of the room of fans, which associates the four fans V1 to V4 and having four discharges D1, D2, D3 D4; four ducts known as "shoes" Z1, Z2, Z3 Z4, each of said "shoes" Z1 to Z4 is respectively coupled to a discharge D1 to D4 of the "Plenum" chamber P, and is directed to each of the machines; each of the "shoes" Z1 to Z4 is gradually diminishing in diameter to form a cone toward the last section of the machine and comprises an intake regulator gate C1, C2, C3, C4, and a cooling duct DE1, DE2, DE3, DE4.... DEn, each of which is directed to each section of each machine; from each cooling duct DE1 to DE4 of the "shoe" Z1 to Z4, the hoses (not illustrated) for mold cooling, are derived.

The conical shape of the "shoes" Z1 to Z4 has the purpose of distributing the same volume of air in all of the sections of the machine. The gate of each "shoe" Z1 to Z4 is generally operated by an electric actuator connected to a controller (not illustrated). This controller has two transmitters as inputs; one of static pressure and the other of the temperature of the air inside the "shoe". The purpose of said controller is to assure a constant pressure in the system, so that, indirectly, a constant temperature in the mold be maintained. A temperature transmitter (not illustrated) is used in order to compensate said pressure since at night, with fresher air, a more efficient cooling is achieved and requires of less air.

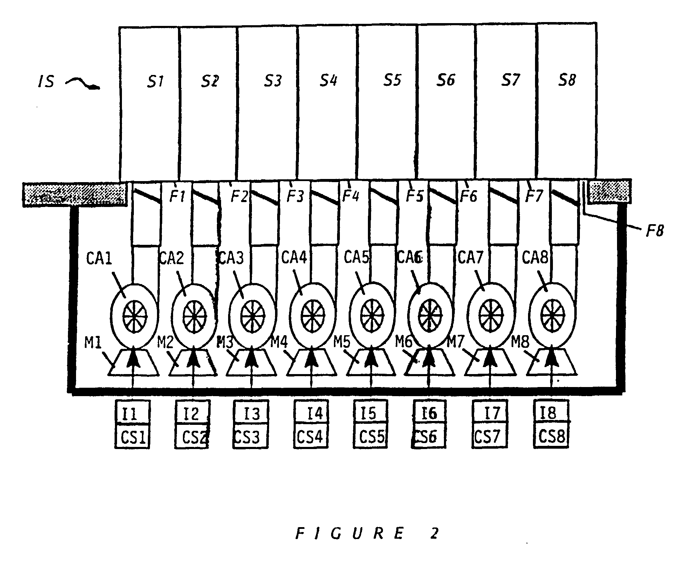

Unlike the above disclosed conventional cooling system, the mold cooling system of molds for glassware forming machines of the present invention, illustrated in the Figure 2, comprises: an cooling apparatus, referred as CA1 to CA8, per each section of each machine, coupled the frame F of each respective section S1 to S8 of an IS machine.

Each cooling apparatus CA1 to CA8 comprises a fan F1 to F8, driven by a motor M1 to M8 having a control system CS1 to CS8 including an inverter I1 to I8 which controls the speed of the motor M1 to M8, by which the air flow is varied saving electric energy.

Said control system CS1 to CS8 also includes a temperature sensor, such as a thermocouple or could be an optic or infrared sensor (not illustrated), to determine the mold temperature, so that the control system is carried out in a close loop to control the inverter I1 to I8 in order to varying the speed of the motor M1 to M8 of the cooling apparatus CA1 to CA8 and consequently the flow and pressure of the cooling air and finally the temperature which is the variable of the process.

It is advisable to include a pre-cooling air system (not illustrated) which could consist of a water cooler or a honeycomb with cold water, at the suction or discharge of air of each cooling apparatus CA1 to CA8, in order to increase the heat extraction capacity of the cooling air, consequently decreasing the amount of cooling air, which allows in turn to reduce the speed of the inverter, consequently obtaining savings in the consumption of energy.

It is therefore to be understand that the mold cooling system for glassware forming machines, of the present invention, is not limited exclusively to the above disclosed and illustrated embodiments, so that the persons skilled in the field, will be qualified by the teachings of the present invention, to suggest modifications and embodiments to the same, which will clearly be within the scope of this invention, as are claimed in the following claims.

## Claims

1. Mold cooling System for glassware forming machines of multiple individual forming sections, **characterized in that** comprising an cooling apparatus per each section of each machine, coupled to the frame of the section.

2. The system in accordance with claim 1, **characterized in that** the cooling apparatus is a fan driven by a motor comprising a control system which controls the speed of the motor, by which the flow of air is varied saving electric energy.

3. The system in accordance with claim 1, **characterized in that** the control system includes a sensor to determine the temperature of the mold, so that the control system is carried out in a close loop to control the inverter in order to varying the speed of the motor of the cooling apparatus and consequently the flow and pressure of the cooling air and finally the temperature which is the variable of the process.

4. The system in accordance with claim 3, **characterized in that** the sensor to determine the temperature of the mold, it is an optic sensor, an infrared sensor, or a thermocouple, by which the temperature of the mold is determined.

5. The system in accordance with claim 1, **characterized in that** the cooling apparatus comprises an air pre-cooling system in order to increase the heat extraction capacity of the cooling air, consequently decreasing the amount of the cooling air, which in turn allows to lower the speed of the inverter, and consequently obtaining a greater saving in the consumption of energy.

6. The system in accordance with claim 5, **characterized in that** the pre-cooling system consists of a water cooler or a honeycomb with cold water at the suction or discharge of air of the cooling apparatus.
